# EUROPEAN PATENT APPLICATION

(11) **EP 1 580 246 A1**
(43) Date of publication of application: **28.09.2005**
(21) Application number: 04251678.1
(22) Date of filing: 24.03.2004
(51) Int. Cl.: C09J 167/02

(54) **Reactive hot melt adhesive**

(71) Applicant: THE DOW CHEMICAL COMPANY, Midland, Michigan 48640 (US); Dow Benelux BV, 4530 AA Terneuzen (NL); Dow Europe GmbH, 8810 Horgen (CH)
(72) Inventor: Bank, David H., Midland, MI 48642 (US); Krabbenborg, Franciscus J.T., 4535 GC Terneuzen (NL); Bar, Georg K., 4532 NL Terneuzen (NL); Dion, Robert P., Midland, MI 48640 (US); Dickie, Brian D., 4535 BX Terneuzen (NL)
(74) Representative: Raynor, John

(57) **Abstract**

A reactive hot melt composition, having a softening point of at least 50°C, and being curable on heating to a temperature of 150°C. The composition comprises a blend of
(a) a macrocyclic oligomer having a softening point of at least 50°C, containing at least one ring having eight or more atoms, and being able to undergo decyclization at a temperature of 150°C or more, to produce a polymerizable species, wherein each cyclic oligomer molecule provides two or more structural repeat units of the same or different formula for the resulting polymer, and
(b) a thermoplastic resin.

## Description

This invention relates to adhesive compositions, and in particular to compositions of the type able to form an initial bond between the parts to be bonded such that the parts can be handled after the initial bonding process, and which subsequently form a permanent bond by a reactive curing process. Such adhesives are generally known as reactive hot melt adhesives (RHMAs). In the automotive industry, RHMAs may find application, for example as "sealer" adhesives for use in an automotive body shop or paint-shop (for example to protect weld-points or flange/gaps from corrosive attacks and humidity, water, dust particles intrusion), or to bond two metal or plastics substrates and/or to increase damping or stiffening.

Currently, these functions are usually fulfilled by compositions with paste-like or liquid consistency, with a range of viscosity depending on the application. Generally, existing reactive compositions are based on rubber, PVC, epoxy resins, acrylics or mixtures thereof. However, these liquid adhesives have a number of problems or difficulties associated with them. In particular, liquid adhesives may be difficult or messy to handle or apply, may be flammable, may present environmental concerns involving volatile organic compounds ("VOCs") and solvent recovery, or may present toxicological concerns. When used as adhesives for steel or aluminium, liquid and low viscosity adhesives have a tendency to "bleed through" to other areas, thereby spoiling the visible decorative surface. The "bleed through" problem associated with liquid adhesives can be solved to some extent using thickeners, to produce adhesives of a pasty consistency. Such pastes often need to be heated to allow efficient application, due to their high viscosity, narrowing their utilization window.

It is known to utilize liquid epoxy adhesives as Reactive Hot Melt Adhesives, for example BETAMATE 1493 from The Dow Chemical Company, to adhere steel and other substrates including aluminium substrates.

WO02/50184 discloses a vibration damping composition which is typically in the form of a paste comprising an epoxy resin, a crosslinking agent and a thermoplastic alpha-olefin/vinyl aromatic interpolymer.

For use in body-shops in the automotive industry, where parts can be oily, compositions need to have enough viscosity and strength after application (so called "wash-off resistance") to withstand the panel degreasing and pre-treatment processes, normally involving dipping and jet-spraying of alkaline cleaning solutions.

Even the high viscosity level of pasty compositions is often not sufficient to guarantee resistance to wash-off in critical areas of the automobile body. Such pasty adhesives do not have enough green strength, and can become de-localised during the body-shop process, if the part is compressed.

A post-application pre-curing step prior to the final cure could potentially assist to some extent, but would affect the cycle time, and require additional space on the production line, as well as affecting the quality of the parts produced.

It would be desirable to provide materials which do not have the handling difficulties of viscous liquid or pasty compositions, but give good wash-off and squeeze resistance, for example by providing a hot melt adhesive in the form of pellets or sheets. Heat curable adhesive sheets suitable for sandwich panels generally have a thickness of 0.5 to 1.5 mm, and should be easy to extrude and handle, and have very high toughness before and after curing at cure temperatures of from 180 to 190°C.

WO-A-0172922 discloses a so-called "dryblend" adhesive, comprising thermoplastic polymer particles. Such adhesives need to be shipped in the absence of air and moisture, and require high shear melting before application, in order to blend the dry ingredients together. As soon as blending has taken place, the curing action begins, and the adhesives must therefore used immediately, because once the reaction is initiated batches have a limited pot life. The compositions disclosed in this does not have the pre-cure Lap Shear strength required for use as so-called "semi-structural" adhesives (i.e., adhesives having a pre-cure Lap Shear strength of at least 4 Mpa).

DE-A-3938376 discloses a one-component heat-curing powder adhesive comprising a mixture of solid and liquid epoxy resins and a polyvinyl acetate plastomer. This adhesive is useful for bonding friction linings with steel, especially in brake and clutch linings for vehicles. A two-step process is used to produce the adhesive, and the resulting composition is not storage stable under pressure, such as can result when the composition is stored in large quantities.

An adhesive heat curable film for use in sandwich applications in automotive production lines must have the required toughness. Typically, a film is considered to have the required toughness if it has an ultimate elongation (elongation at rupture under tensile loading) of at least 40, preferably at least 50 %, both before and after curing, a cohesive bond strength of greater than 5 N/mm after short (2 minutes) and long (20 minutes) exposure to a curing temperature of 180 to 190°C, as well as an elasticity modulus of greater than 10 MPa at 200°C after curing. An ultimate elongation of at least 40 to 50 % allows stamping and deformation of the parts to be sandwiched, without the bond between the parts slipping. The cohesive bond strength for bonding steel or aluminium is measured by 180° peel strength (measured according to DIN 53282). This test is generally referred to herein as "T-Peel" strength. The strength of an adhesive after curing is measured by means of Lap Shear Strength (LSS) (measured according to DIN EN 1465).

Most thermosetting adhesives currently used, for example epoxy-containing adhesives, are difficult to extrude into films with an accurate and even thickness or alternatively require internal reinforcement, if they are to have an E-modulus of greater than 10 MPa at 200°C. WO0153072 discloses the addition of poly(2,6 dimethyl-1,4 phenylene ether) (PPE) which has a glass transition temperature of greater than 180°C to a mixture of an epoxy resin and a curing agent to produce a composition which is useful in sandwich applications, but does not have the usual disadvantages. This composition is difficult to melt blend and process into a film without curing the epoxy resin because the glass transition temperature of the PPE is approximately the same as the activation temperature of the epoxy resin.

In US6387535, the strength (and conductivity) of an epoxy resin is increased by the use of stainless steel wool as a filler. Compositions of this type cannot be processed into granules or films using standard extrusion equipment and therefore require a different process.

WO0162490 discloses the lamination of composite steel with woven or non-woven fiber which is impregnated with a heat curable resin such as epoxy resin. In this process, woven or non-woven fibers go through a wetting process and are layered on to a steel surface. Subsequent curing of the epoxy produces a composite with good strength properties.

WO0053665 discloses the use of poly-ethylene terephthalate (PET) as the polymer phase in sandwich panels for use, for example, in automobiles. Pure PET has poor adhesion to steel however, unless it is extruded directly onto the steel surface at a temperature in the region of 260-275°C. Upon cooling and/or annealing, crystallisation and shrinkage tend to occur which can result in adhesion failure and the formation of a brittle polymer layer that cannot be used to produce sandwich panels in normal stamping processes. One possible solution to this is to use amorphous PET, but amorphous PET tends to have low strength properties above the glass transition temperature i.e. 70 to 80°C.

We have now discovered a reactive hot melt composition which is solid at ambient temperature (20°C), and which has excellent initial adhesion as well as excellent properties of the final cured composition. The composition can be formulated into free-flowing pellets or beads, which can be heated to form an extrudable mass, and thereafter applied using conventional extrusion techniques at melt temperatures of approximately 100 to 140°C. It can also, if desired, be formulated into sheets or films for use between two parts to be adhered. The composition therefore overcomes many of the difficulties encountered by prior art reactive hotmelt adhesives for "semi-structural" applications used in car body construction. The resultant tough, heat curable film, having good elongation properties, such as ultimate elongation of at least 40 to 50 %, allows deformation and stamping of the parts adhered.
According to a first aspect of the invention, there is provided a reactive hot melt composition, having a softening point of at least 50°C, and being curable on heating to a temperature of 150°C , the composition comprising a blend of
(a) a macrocyclic oligomer having a softening point of at least 50°C, containing at least one ring having eight or more atoms, and being able to undergo decyclization at a temperature of 150°C or more, to produce a polymerizable species, wherein each cyclic oligomer molecule provides two or more structural repeat units of the same or different formula for the resulting polymer, and
(b) a thermoplastic resin.

The term "macrocyclic oligomer" as used herein means a cyclic molecule containing at least one ring having eight or more atoms, and wherein the molecule is able to undergo decyclization to produce a species capable of polymerization to form a thermoplastic polymer, wherein each cyclic oligomer molecule provides two or more structural repeat units of the same or different formula for the thermoplastic polymer. A macrocyclic oligomer may be a co-oligomer that is an oligomer having two or more of the same structural repeat units within one cyclic molecule or a multi-oligomer, that is an oligomer having two or more different structural repeat units within one cyclic molecule. Decyclization means the breaking of a cyclic ring structure to form a non-cyclic structure. Decyclization generally results in the formation of a compound having one or more, preferably two or more reactive functional groups through which polymerization can take place.

In a particularly preferred embodiment, the composition also comprises a polymer capable of reacting with the cyclic oligomer to produce a cross-linked thermoset polymer. Preferred examples of such materials are polymers capable of cross-esterification with the cyclic oligomer, for example polymers containing epoxy groups, and in particular polymers containing glycidyl methacrylate groups.

Macrocyclic oligomers for use in the present invention are generally solid (for example powders, pellets, or flakes) at room temperature and are molten with a viscosity of approximately 150 mPa.s (150cP); when heated above 150°C (300°F), dropping to below 20 mPa.s (20cP) at 180°C (355°F).

Examples of suitable macrocyclic oligomers are described in US-A-6369157 and US-A-5231161. Preferred macrocyclic oligomers include macrocyclic polycarbonates, polyesters, polyimides, polyetherimides, polyphenylene ether-polycarbonate co-oligomers, polyetherimide-polycarbonate co-oligomers and blends, compositions and co-oligomers prepared therefrom. The macrocyclic oligomer preferably includes a macrocyclic polyester, a polycarbonate a polyphenylene ether, or a blend or co-oligomer thereof. It is particularly preferred that the macrocyclic oligomer is a macrocyclic polyester.

Preferably, the macrocyclic polyester oligomer contains a structural repeat unit corresponding to the formula: 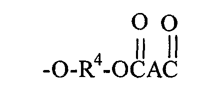 wherein each R⁴ independently is an alkylene, a cycloalkylene, a monooxyalkylene or a polyoxyalkylene group and each A independently is a divalent aromatic or alicyclic group. Preferably A is a meta or para-linked monocyclic aromatic or alicyclic group. More preferably A is a C₆ to C₁₀ monocyclic aromatic or alicyclic group. R⁴ is preferably a C₂₋₈ alkylene, a monooxyalkylene or a polyoxyalkylene group.

In a particularly preferred embodiment, the macrocyclic polyester oligomer is a glycol terephthalate, an isophthalate or a mixture of two or more thereof, for example 1,4-butylene terephthalate; 1,3-propylene terephthalate; 1,4-cyclohexylene dimethylene terephthalate, ethylene terephthalate, 1,2-ethylene 2,6-naphthalene dicarboxylate or a macrocyclic co-oligomer comprising two or more of the above macrocyclic oligomers.

The macrocyclic oligomer may be present in the hot melt composition in an amount of 30 parts by weight or greater based on 100 parts by weight of the polymer composition (i.e., including the thermoplastic polymer and any other auxiliary polymers or additives), more preferably 40 parts or greater and most preferably 50 parts by weight or greater. The macrocyclic oligomeris present in the polymeric composition in an amount of 99 parts by weight or less based on 100 parts by weight of the polymer composition, more preferably 75 parts or less and most preferably 70 parts by weight or less.

The compositions of the present invention preferably include one or more catalysts effective to promote the polymerization of the macrocyclic oligomers. An appropriate catalyst may be selected for the macrocyclic oligomer, depending upon the functional groups contained in the macrocyclic oligomers. The catalyst may be added to the composition and mixed for a period of time sufficient to disperse the catalyst through the mixture. In order to effect curing, the temperature of the composition may be raised to a temperature at which the macrocyclic oligomers undergo decyclization and polymerization (e.g., greater than 150°C.)

The selection of an appropriate catalyst is dependent upon the nature of the macrocyclic oligomer. One skilled in the art is able to select suitable catalysts for the various macrocyclic oligomers which can be used in the hot melt composition. In a preferred embodiment, the macrocylic oligomer is an ester-containing macrocyclic oligomer. In this embodiment, a catalyst capable of catalyzing a transesterification polymerization of a macrocyclic oligomer may be employed, for example a tin or titanate-based transesterification catalyst, although other catalysts may be used. Examples of such catalysts are described in U.S. Patent 5,498,651 and U.S. Patent 5,547,984.

One or more catalysts may be used together or sequentially.

Illustrative examples of classes of tin compounds that may be used in the invention include monoalkyltin hydroxide oxides, monoalkyltinchloride dihydroxides, dialkyltin oxides, bistrialkyltin oxides, monoalkyltin trisalkoxides, dialkyltin dialkoxides, trialkyltin, alkoxides, tin compounds having the formula 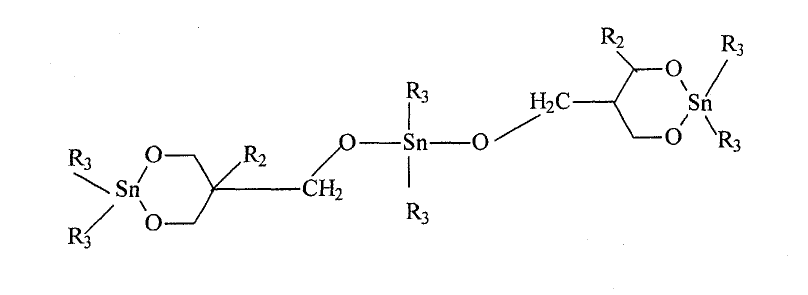 and tin compounds having the formula 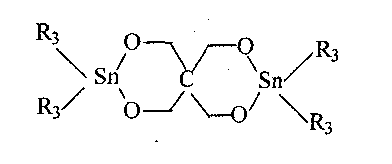 wherein R2 is a C1-4 primary alkyl group, and R3 is C1-10 alkyl group.

Specific examples of organotin compounds that may be used in this invention include dibutyltin dioxide, 1,1,6,6-tetra-n-butyl-1,6-distanna-2,5,7-10-tetraoxacyclodecane, n-butyltinchloride dihydroxide, di-n-butyltin oxide, dibutyltin dioxide di-n-octyltin oxide, n-butyltin tri-n-butoxide, di-n-butyltin di-n-butoxide, 2,2-di-n-butyl-2-stanna-1,3-dioxacycloheptane, and tributyltin ethoxide. U.S. Patent No. 5,348,985 (Pearce et al) disclose suitable catalysts. In addition, tin catalysts described in US 6,420,047 may be used in the polymerization reaction.

Titanate catalysts that may be used include those described in US-A-6420047. Illustrative examples include tetraalkyl titanates (e.g., tetra(2-ethylhexyl) titanate, tetraisopropyl titanate, and tetrabutyl titanate), isopropyl titanate, titanate tetraalkoxide. Other illustrative examples include (a) titanate compounds having the formula 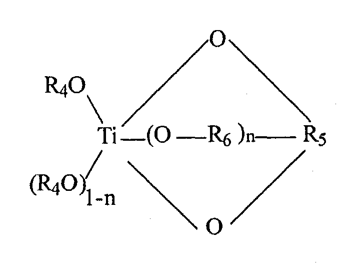 wherein each R4 is independently an alkyl group, or the two R4 groups taken together form a divalent aliphatic hydrocarbon group; R5 is a C2-10 divalent or trivalent aliphatic hydrocarbon group; R6 is a methylene or ethylene group; and n is 0 or 1, (b) titanate ester compounds having at least one moiety of the formula 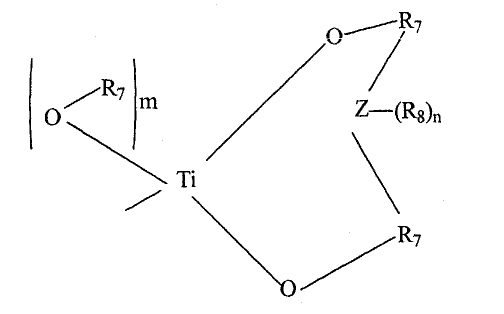 wherein each R7 is independently a C2-3 alkylene group; Z is O or N; R8 is a C1-6 alkyl group or unsubstituted or substituted phenyl group; provided when Z is O, m-n-0, and when Z is N, m=0 or 1 and m+n = 1, and (c) titanate ester compounds having at least one moiety of the formula
wherein each R9 is independently a C2-6 alkylene group; and q is 0 or 1.

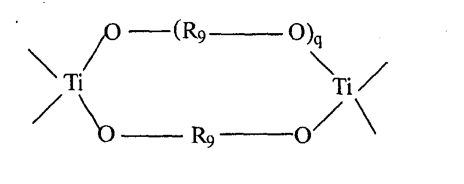

The catalyst level to be used in the composition should be the lowest level that permits rapid and complete polymerization, and which produces a high molecular weight polymer. The mole ratio of transesterification catalyst to macrocyclic oligomer preferably ranges from 0.01 mole percent or greater, more preferably from 0.1 mole percent or greater and more preferably 0.2 mole percent or greater. The mole ratio of transesterification catalyst to macrocylic oligomer is from 10 mole percent or less, more preferably 2 mole percent or less, even more preferably 1 mole percent by weight or less, and most preferably 0.6 mole percent or less.

The transesterification or polymerization reaction takes place at a temperature of about 150°C or greater, preferably about 170°C or greater and more preferably 190°C or greater. Preferably, the polymerization temperature takes place about 300°C or less, more preferably 250°C or less, even more preferably 230°C or less and most preferably 210°C or less.

In a preferred embodiment, two different catalysts are used for the transesterification or polymerisation. Typically, the first and second catalysts are such as to provide different polymerisation rates. For example, a first catalyst may be is 1,1,6,6,-tetrabutyl-1,6-distanna-2,5,7,10- tetraoxacyclodecane (available commercially under the designation XB3), which results in a fast polymerisation time of 2-4 minutes, and a second catalyst may be butyl tin dihydroxy chloride (available commercially under the designation XB2) which results in a slow polymerisation time of approximately 20 minutes.

The thermoplastic resin, which is the second principal component of the compositions according to the invention, serves to increase and control the viscosity of the composition at low shear rates, and so increase the stability of the polymer, on film extrusion or on application of an adhesive polymer bead to a surface at 100 to 150°C, as well as during pellet formation,.

The thermoplastic resin is preferably a random interpolymer of ethylene with at least one additional comonomer, or a polyester.

The comonomer is preferably selected from methylacrylate, methylmethacrylate, ethylacrylate, ethylmethacrylate, butylacrylate, butylmethacrylate, vinyl acetate, maleic anhydride, and/or glycidyl methacrylate. The ethylene interpolymer may be, for example an ethylene-vinyl acetate copolymer, an ethylene-methyl acrylate copolymer an ethylene-ethyl acrylate copolymer, an ethylene-maleic anhydride copolymer, an ethylene-glycidyl methacrylate copolymer, an ethylene-vinyl acetate-maleic anhydride terpolymer or ethylene-ethyl acrylate-glycidyl methacrylate terpolymer.

The preferred ethylene interpolymers are made by free-radical polymerisation and contain 20-30% of a comonomer selected from alkyl acrylates, alkyl methacrylates, vinyl esters, glycidyl methacrylate and maleic anhydride.

The ethylene interpolymer may be used in a total an amount of from 10 to 60, preferably from 10 to 30, more preferably from 10 to 20 parts by weight based on 100 parts by weight of the polymer composition.

When the ethylene interpolymer is an ethylene-vinyl acetate copolymer, the copolymer preferably has a vinyl acetate content of greater than 20%, preferably from 30 to 40% by weight. The EVA copolymer preferably has a MFR when measured according to ISO 1133 at 190°C and 2.16kg of greater than 50 g/10min., more preferably from 200 to 600 g/min. Suitable commercially available EVA copolymers include EvataneTM from Atofina and EscoreneTM from Exxon Mobil. Particularly preferred are EscoreneTM UL05540 (MFR of 60g/10 min.) and EvataneTM 33400 (MFR of 350 to 450 g/10 min. and a vinyl acetate content of 30%).

When the ethylene interpolymer is a copolymer having a monomer selected from an acrylate or methacrylate, the interpolymer preferably has an acrylate or methacrylate content of greater than 18%, preferably 20-30%. Suitable interpolymers are, for example, ethylene-methylacrylic ester copolymers, ethylene-ethylacrylic ester copolymers, or ethylene-butylacrylic ester copolymers. Commercially available examples of suitable interpolymers include LotrylTM from Atofina, EnableTM and OptemaTM from Exxon Mobil Chemical and Amplify EA series from The Dow Chemical Company (Amplify EA 100, 101, 102 and 104).

Suitable terpolymers are ethylene-vinyl-acetate-maleic anhydride polymers (for example Orevac TTM), ethylene-acrylate-maleic anhydride polymers (for example LotaderTM AX4720), ethylene-acrylate-glycidyl methacrylate polymers (for example LotaderTM AX8900 and AX8950) and terpolymers containing acrylate and/or methacrylate units and/or methyl acrylate units (for example EscorTM terpolymer from Exxon Mobil Chemical).

Methacrylate and/or acrylate-containing polymers, for example ethylene-acrylic ester-glycidyl methacrylate polymers, preferably contain at least 25% by weight of ethylenically unsaturated monomer units and have an MFR when measured according to ISO 1133 of less than 10 g/10min. at 190°C and 2.16kg. Preferred commercial polymers include LotaderTM AX 8900 which has a MFR of 6 g/10 min. and 32% by weight of ethylenically unsaturated monomer units and AX4720 which has a MFR of 7 g/10 min. and 30 % by weight of ethylenically unsaturated monomer units.

Particularly preferred are thermoplastic polymers which are able to react, under appropriate curing conditions with the cyclic oligomer, in order to assist in the curing of the final formulation. In particular, thermoplastic polymers are preferred which are able to undergo a cross-esterification reaction in the presence of the cyclic oligomer. Preferred examples of such thermoplastic polymers are polymers containing a glycidyl methacrylate functionality. Commercially available polymers of this type include Lotader™ AX 8900. Such polymers capable of cross-esterification can contribute to the production of a cross-linked thermoset polymer with high strength after, heat curing.

The thermoplastic polymer may also optionally comprise ionomer resins which are ethylene copolymers containing carboxylic groups and sodium, zinc, or lithium, (for example Surlyn resins from Dupont).

Additional polymers that can be used in small amounts in the thermoplastic resin include non-random copolymers, e.g. grafted copolymers. Examples of such grafted copolymers which may be used are maleic anhydride grafted elastomers with a high content of maleic anhydride, for example having a maleic anhydride content of from 0.5 to 2 weight %. Suitable commercial examples of maleic anhydride grafted elastomers include LotaderTM 8200, LotrylTM 35BA, LotrylTM 28BA 175 and OrevacTM terpolymer EVA 9305 from ATO, ExxelorTM VA1801 (Semi crystalline) and ExxelorTM 1803(Amorphous) from Exxon, FusabondTM N series: MF416D, MN493D, MN494D and MO525D and Fusabond TM C series MC190D and MC250D (Dupont).

Other polymers which may be used as components of the thermoplastic resin include other olefinic and/or styrenic base adhesive polymers which have carboxylic acid functionality and/or anhydride functionality. Examples include polybutylene-maleic anhydride, polybutylene-graft-maleic anhydride, polypropylene-graft-maleic anhydride, and styrenic-butadiene block copolymer-graft-maleic anhydride.

In an alternative embodiment, the thermoplastic resin comprises a polyester resin. The polyester resin can be used alone or in combination with other resins. The polyester resin can serve to improve the adhesion of the composition, in particular to steel substrates, both before and after curing. The polyester is preferably poly-e-caprolactone (for example those available from The Dow Chemical Company under the tradename Tone™, in particular those sold under the designations Tone P-737, P-752, P-767 and P-787). Tone P-767 is particularly preferred. An alternative preferred polyester is polyepoxyundecylenic acid (PEUDA). The polyester resin serves to improve the adhesion of the composition, in particular to steel substrates, at temperatures above 70-80°C and also increase the storage stability of the granulated compositions at room temperature.

Preferably the polyester is used in an amount of from 5 to 20, most preferably 5 to 10 parts by weight based on 100 parts by weight of the polymer composition. Most preferably, the polyester is used in combination with other thermoplastic resins. The use of polyester can result in good T-peel strength of the composition after curing.

The thermoplastic resin preferably has a melting point less than 105°C and more preferably less than 95°C. The term "melting point" as used herein in reference to the thermoplastic resin is intended to refer to "Mettler Softening Point", as determined by ASTM D3104-99.

Additionally the resin should preferably have a melt index of at least 2 g/10 minutes, more preferably at least 5 g/10 minutes and most preferably at least 6 g/10 minutes when tested according to ASTM D-1238 (190°C, 2.16kg). If the melt index of the thermoplastic resin is too low, it will result in insufficient flow and poor wet-out of the composition at application. If the melt index is too high, it will result in insufficient melt strength to allow the composition to be extruded into a film or bead.

When selecting the thermoplastic resin for use with the macrocyclic oligomer, it should be borne in mind that acid end groups (which may also result from hydrolysis or oxidation) are generally undesirable as they are good ligands for tin catalysts and can deactiviate the catalyst (simultaneously inactivating the chain end and removing catalyst). Acid also catalyzes the formation of THF from butanediol chain ends which is very undesirable, as it generates even more acid end groups, which exacerbates the problem of deactivating the catalyst. Any material containing an aliphatic hydroxyl group can be incorporated into the polymer (for example polyglycol soft segments). Glycols containing more than 2 hydroxyl groups are able to promote crosslinking which is desirable for many applications.

Water is detrimental, as it will also lead to the generation of acid end groups and reduce final molecular weight of the polymer.

The composition of the invention may optionally also comprise a filler. The filler serves to decrease the tendency of the molten material to form threads and tails when the molten material is applied to a surface by extrusion. Certain fillers can also increase the viscosity at low shear rates by producing a thixotropic effect. The filler may preferably be employed in an amount of from 0 to 40, more preferably from 0 to 25, and most preferably from 0 to 15 parts by weight based on 100 parts by weight of the polymer composition. The filler is typically an inorganic mineral, such as calcium carbonate, magnesium silicate (talc), or calcium silicate (wollastonite). The use of basic materials such as calcium carbonate, which are capable of neutralising any acids which may be present in the resin, is desirable, as such materials act as corrosion inhibitors. Suitable fillers are precipitated calcium carbonate or ground calcium carbonate, magnesium silicate, and calcium silicate.

Further components which can optionally be added to the composition include plasticisers, polyols, glycols, soybean oils, epoxydised soyabean oils, polyester oils, mineral oils and epoxy resins. Suitable components of this type will be known to one of skill in the art.

Suitable foaming agents, in particular foaming agents having an activation temperature of from 100-140°C are well known to one of skill in the art.. Examples are azo compounds, such as azodicarbonamide, azodiisobutyro-nitrile, barium azodicarboxylate, nitroso compounds such as N,N'-dimethyl-N,N'-dinitrosoterephthalamide, hydrazides such as benzenesulfonhydrazide, p,p-oxybis (benzenesulfonylhydrazide), carbazides, such as 4,4-oxybenzene sulfonyl semicarbazide, p-toluene sulfonyl semicarbazide, triazines such as trihydrazino triazine, and reactive couples such as mixtures of citric acid and sodium bicarbonate. Such materials may be used singly or in combinations of two or more thereof. Suitable commercially available foaming agents include products sold under the names Hydrocerol™ (from Boehringer Ingelheim), Celogen™ OT, AZ, AZNP, and RA (from Crompton), Ficel™, Genitron™ and Planagen™ (from Bayer), and Safoam™ FP, RPC and RIC FP (from Reed International Corporation). Preferred foaming agents are p,p-oxybis(benzenesulfonylhydrazide) (for example Celogen™ OT) and azodicarbonamide (for example Celogen™ AZ).

Typical plasticisers include, for example phthalates, in particular alkyl phthalates, for example di-isodecylphthalate (DIDP). Other examples of plasticisers which are suitable are diisoheptyl phthalate, diisononyl phthalate, diisodecyl phthalate, diisoundecyl phthalate, diisotridecylphthalate, and diisononyl adipate and diisodecyl adipate. These plasticisers are sold under the tradename Jayflex™ from Exxon Mobil. The most preferred plasticiser is Jayflex™ diisodecyl phthalate. Other suitable plasticisers will be known to one of skill in the art.

Compositions of the above type have been found to have good initial adhesion properties to steel, particularly oily steel, whilst being capable of formulation into pellets which can be conveniently handled. They can be easily melted and applied, using conventional extrusion apparatus.

The compositions of the present invention are useful as RHMAs, in particular as adhesives for oily steel parts in car assembly plants, and have the advantage that because they are solids ad ambient temperatures, they may be shipped and stored in a more convenient manner than conventional liquid or pasty resins.

The invention also provides a method of preparing a reactive hot melt composition comprising compounding together the various component materials, as discussed above. The compounded composition may be pelletised to produce a dry free-flowing material.

The composition may generally be prepared by compounding the ingredients using any conventional form of compounding apparatus, for example single screw extruders, twin screw extruders, planetary extruders, ring extruders, batch internal mixers, kneaders or mixers such as those sold by Banbury, Farrell, Buss, or Kobe. In order to produce the compositions of the present invention, the mixing process preferably has a maximum processing temperature of less that 150°C, more preferably less than 130°C and a mixing time of less than 5 minutes, more preferably less than 2 minutes. The processing temperature and mixing time are important to ensure that the composition has not been cured to a significant degree, during the production of the RHMA composition.

In an alternative embodiment all of the components with the exception of the catalyst can be compounded initially to form a pre-blend and then the catalyst may be added separately in a hotmelt extrusion or hot melt film extrusion step. However, the more preferable method of producing the reactive hot melt adhesive is by compounding all of the ingredients together at process conditions such that the polymerisation reaction does not take place until the heat activation step.

In the preferred process, the ingredients are melt blended and compounded in a Twin Screw Extruder (TSE) with a residence times of less than two minutes in the extruder and subsequently pelletised under water using a Gala™ Underwater granulator. The compositions according to the invention generally have excellent shelf life, and can be processed as hotmelt adhesives in a hotmelt extruder or extruded into a reactive hotmelt film at temperatures above the melting point of the composition (typically 90°C) and below the polymerisation temperature of the composition (typically 180°C). Extruding the reactive composition at a temperature below the normal curing temperature of the composition minimizes the amount of curing that takes place during extrusion.

The extruded adhesive bead or film can be applied at a lower temperature than the curing temperature causing the adhesive to form a relatively weak initial bond with the substrate. Final adhesive properties are obtained after curing, typically at a temperatures of 180°C or more, although the exact curing temperature and curing time will depend on the exact composition, and more particularly on the catalyst employed.
Pelletised compositions of the present invention are free flowing at room temperature but may be transported in large containers, in which temperatures can reach 40 to 50 °C. In order to improve the free-flowing properties of the pellets, it may be desirable to apply a coating. The pellet coating is preferably a powder coating comprising the filler, applied to the composition in an amount of from 0.2 to 2.0 parts by weight based on 100 parts by weight of the polymer composition. Optionally an anti-cluster additive may be incorporated in the water into which the pellets are extruded. The water additive may be a siloxane oil (for example those supplied under the trade Marks DC290 or DC200/350 from Dow Coming), an oxyalkylate (for example EC9092ATM from Nalco Exxon) or a water dispersion of polyethylene (for example Hordammer PE 03TM from Hoechst). The application of 0.5 to 2 parts by weight based on 100 parts by weight of the polymer composition talc results in free-flowing pellets at temperatures of up to 45°C

In a preferred embodiment of the present invention the composition may be processed to form a film, for example by melt compounding the ingredients using an extruder fitted with a film die. The entire mix may be melt blended and extruded to form a reactive hotmelt film. As before, the resulting film can be applied onto steel as steel coating and stored prior to use.

Granules and films of the present invention are non blocking and storage stable. By storage stable, it is meant that the granules can be stored at room temperature (22.2°C (72°F), 50 percent relative humidity) for long periods of time until needed, without spontaneously forming clumps or blocks, or curing.

In a fourth aspect of the invention, there is provided a method of adhering a first component to a second component, comprising the steps of melting a composition as described above, contacting the first and second components with the melted composition to form an initial bond between the components; and applying heat to cure the composition.

Preferably, the composition is applied to a substrate at a temperature of from 110 to 140°C and is polymerised at a temperature above 150 °C, preferably above 180 °C for a time of more than 5 minutes. 110 to 140°C is also a suitable temperature for forming films and sheets of the composition.

In order to minimise premature curing, the composition of the present invention is preferably applied to a substrate by means of an applicator which limits the temperature and time exposure of the composition as the composition is applied to the substrate. If conventional RHMA equipment is used, the temperature of application is preferably less than 150°C, more preferably less than 130°C and the time at the temperature of application is preferably less than 10 minutes, more preferably less than 3 minutes. A preferred application system uses a heated pumping screw equipped with an accumulator which feeds the RHMA directly onto the substrate.

When cured, the compositions of the present invention generally have excellent Lap Shear Strength (LSS) (measured according to DIN EN 1465) and a strong cohesive bond strength determined by the T-Peel strength. The preferred compositions according to the invention, after curing at 190 to 200°C for between 5 and 20 minutes, can achieve LSS values of from 4 to 5 MPa and T-Peel strengths of from 5 to 10 N/mm. Typically, compositions according to the invention have E-modulus at 200°C of > 10MPa.

The cured adhesive can also provide desirable characteristics such as excellent temperature and chemical resistance, and excellent dimensional stability. In addition, the uncured adhesive bead or film exhibits excellent "green strength" and "melt strength" at application temperatures, which prevents adhesive bleed through. The phrase "green strength" refers the bond strength of the adhesive before cure and the phrase "melt strength" refers to the dimensional stability of the adhesive while still in a molten state.

Adhesive beads or films of the present invention can be used to bond two pieces of steel together or bond aluminium with steel or other metals in car body construction replacing or partially replacing hem flanges and welding operations.

The present invention is further illustrated by the following Examples.

### EXAMPLES 1-7.

Reactive hot melt compositions were prepared by melt blending the components shown in Tables 1, using a standard Twin Screw Extruder (TSE). All percentages are percentages based on weight of the composition unless stated otherwise. The catalyst used was 1,1,6,6,-tetrabutyl-1,6-distanna-2,5,7,10-tetraoxacyclodecane (XB2) or butyl tin dihydroxy chloride (XB3).

Solid, granular beads were prepared from the compositions, using an underwater grinder attached to the extruder. Each of the compositions of Table 1, storage stable beads were produced having a melt temperature of 110 to 115°C, suitable for normal granular conveying and storage. In each case, the beads could be applied onto steel as a hotmelt adhesive at melt temperature of 110 to 140°C and showed good adhesion before and after curing. After curing, each of the compositions of Table 1 had a good surface finish, such that they had an excellent aesthetic appearance. These compositions are therefore well suited for seam sealer applications which need to be over-paintable and have good aesthetics after painting, as well as having a Lap shear strength of 1 to 6 MPa or higher.

**TABLE 1:**

| **Granular Compositions - Examples 1-7** | | | | | | | |
|---|---|---|---|---|---|---|---|
| Example | 1 | 2 | 3 | 4 | 5 | 6 | 7 |
| Component | | | | | | | |
| Ethylene Interpolymer (Lotader AX8900) | 80 | 70 | 60 | 50 | 40 | 30 | 33 |
| Cyclic Butylene Terephthalate with 100ppm XB3 catalyst | 20 | 30 | 40 | 50 | 60 | 70 | 20 |
| EVA | | | | | | | 20 |
| DIDP | | | | | | | 7 |
| Talc | | | | | | | 20 |

### EXAMPLES 8-15

Reactive hot melt compositions were prepared by melt blending the components shown in Tables 2, using the same Twin Screw Extruder (TSE) as in Examples 1-7.

Film samples were prepared from the compositions by extrusion at 100 to 110°C. The catalyst used was butyl tin dihydroxy chloride (XB3) or 1,1,6,6,-tetrabutyl-1,6-distanna-2,5,7,10-tetraoxacyclodecane (XB2).

**Table 2 :**

| **Film Extrusion Examples - Examples 8-15** | | | | | | | | |
|---|---|---|---|---|---|---|---|---|
| Example | 8 | 9 | 10 | 11 | 12 | 13 | 14 | 15 |
| Component | | | | | | | | |
| Ethylene Interpolymer (Lotader AX8900) | 50 | 50 | 50 | 60 | 70 | 40 | 50 | 60 |
| Cyclic Butylene Terephthalate and 100ppm XB3 or XB2 | 50 | 50 | 50 | 40 | 30 | 50 | 40 | 30 |
| Catalyst type 100ppm | XB3 | XB3 | XB2 | XB2 | XB2 | XB2 | XB2 | XB2 |
| Tone 767 | | | | | | 10 | 10 | 10 |

Lap Shear Strength test according to DIN EN 146 and the "T-peel" test according to DIN 53282 are as follows.

The adhesion ("T-peel" strength) of the compositions of the above Examples was tested according to DIN 53253, before and after oven curing at 200°C for 20 minutes.
Brief details of the "T-peel" test are as follows.

T-peel test: degreased steel samples were used. The test used a peel rate of 10mm/minute. The polymer adhesive film was 1- 1.5mm thick, 25 mm wide and bond line length was 10mm. Samples are pre-cured at 200°C for 5 minutes and post cured at 200°C for 20 minutes to obtain final bond line thickness of 0.5 mm. The results are reported as force in Newton/bond line length.

Lap Shear Strength of adhesion to degreased steel samples was tested according to DIN EN 146 at 10mm/minute. The polymer adhesive film was 1-1.5mm thick, 25 mm wide and bond length was 10mm. Samples were cured at 185°C for 30 minutes to obtain bondline thickness of 0.5mm. The results are reported in MPa.

Tables 3 show the average and maximum 180° T-peel strength in N/mm before and after curing and the Lap Shear Strength.

**Table 3:**

| **Peel strength and Lap Shear Strength** | | | |
|---|---|---|---|
| Example No | Lap Shear (MPa) | T-peel (max) (N/mm) | T-peel (avge) (N/mm) |
| FILM compositions | | | |
| 8 | 3.9 | Nd | nd |
| 9 | 5.4 | 7.07 | 1.24 |
| 10 | 8 | 10.4 | 5.72 |
| 11 | 6.5 | 11.84 | 10 |
| 12 | 5.7 | 7.64 | 4.24 |
| 13 | 4.2 | 2.48 | 1.84 |
| 14 | 4.3 | 5.08 | 4.12 |
| 15 | 4.2 | 14 | 12.44 |

| Granular Compositions | | | |
|---|---|---|---|
| 4 | 6.5 | Nd | nd |
| 7 | 1.5 | Nd | nd |
| | | | |

The T-peel strength before curing is not higher than 1 N/mm.

Preferred compositions for use as core polymers for sandwich panels comprise from 40 to 60 weight % of a thermoplastic adhesive resin, preferably comprised of a terpolymer of ethylene with glycidyl methacrylate and another ethylenically unsaturated monomer, and from 40-60% of cyclic butylene terephthalate, together with one of the catalysts or referred to in Example 1.

In a further preferred embodiment, the composition includes a polyester, for example poly(epoxyundecylenic acid). The most preferred composition comprise an ethylene-acrylate-glycidyl methacrylate polymer (for example LotaderTM AX8900). Such compositions a continuous increase in viscosity and increase of stiffness in the solid state, as the temperature is increased from 150-200°C, and hence excellent curing. The curing can be demonstrated by a marked decrease in measured extractables as compared with the composition prior to curing.

Whilst the invention has been described with reference to the preferred embodiments, it is to be appreciated that many modifications and variations are possible within the scope of the invention.

## Claims

1. A reactive hot melt composition, having a softening point of at least 50°C, and being curable on heating to a temperature of 150°C , the composition comprising a blend of
(a) a macrocyclic oligomer having a softening point of at least 50°C, containing at least one ring having eight or more atoms, and being able to undergo decyclization at a temperature of 150°C or more, to produce a polymerizable species, wherein each cyclic oligomer molecule provides two or more structural repeat units of the same or different formula for the resulting polymer, and
(b) a thermoplastic resin.

2. A composition as claimed in Claim 1, wherein the thermoplastic resin comprises a polymer capable of reacting with the cyclic oligomer to produce a cross-linked thermoset polymer.

3. A composition as claimed in Claim 2 wherein the polymer capable of reacting with the cyclic oligomer is a material capable of cross-esterification.

4. A composition as claimed in Claim 3 wherein the polymer capable of reacting with the cyclic oligomer is a polymer containing glycidyl methacrylate groups.

5. A composition as claimed in Claim 1, wherein the thermoplastic resin comprises a random interpolymer of ethylene with at least one additional comonomer.

6. A composition as claimed in Claim 5, wherein the comonomer is methylacrylate, methylmethacrylate, ethylacrylate, ethylmethacrylate, butylacrylate, butylmethacrylate, vinyl acetate, maleic anhydride, and/or glycidyl methacrylate.

7. A composition as claimed in Claim 5 or Claim 6, wherein the ethylene interpolymer is an ethylene-acrylic acid copolymer, an ethylene-methacrylic acid copolymer, an ethylene-acrylic acid-methacrylic acid terpolymer, an ethylene-vinyl acetate copolymer, an ethylene-methyl acrylate copolymer an ethylene-ethyl acrylate copolymer, an ethylene-maleic anhydride copolymer, an ethylene-glycidyl methacrylate copolymer, an ethylene-vinyl acetate-maleic anhydride terpolymer or ethylene-ethyl acrylate-glycidyl methacrylate terpolymer.

8. A reactive hot melt composition as claimed in any one of the preceding Claims, wherein the thermoplastic resin comprises a polyester.

9. A reactive hot melt composition as claimed in any one of the preceding Claims, additionally comprising a polymerisation catalyst.

10. A reactive hot melt composition as claimed in Claim 6, wherein the catalyst comprises at least one of a tin compound and or a titanium compound.

11. A reactive hot melt composition as claimed in Claim 6 or Claim 7, wherein the catalyst is present in an amount from 0.1 to 1 mole percent based on the macrocylic oligomer.

12. A reactive hot melt composition as claimed in any one of the preceding Claims, wherein the macrocyclic oligomer is a macrocyclic polycarbonate, polyester, polyimide, polyetherimide, polyphenylene ether-polycarbonate co-oligomer, polyetherimide-polycarbonate co-oligomer or a blend of two or more thereof, or a composition or co-oligomer prepared therefrom.

13. A reactive hot melt composition as claimed in Claim 9, wherein the macrocyclic oligomer contains a structural repeat unit corresponding to the formula: 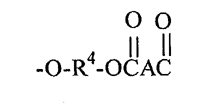 wherein each R⁴ independently is an alkylene, a cycloalkylene, a monooxyalkylene or a polyoxyalkylene group and each A independently is a divalent aromatic or alicyclic group.

14. A reactive hot melt composition as claimed in Claim 9, wherein the macrocyclic oligomer contains structural repeat units of one of 1,4-butylene terephthalate, 1,3-propylene terephthalate, 1,4-cyclohexylene dimethylene terephthalate, ethylene terephthalate, 1,2-ethylene 2,6-naphthalene dicarboxylate or wherein the macrocyclic co-oligomer comprising two or more of the said structural repeat units.

15. A composition as claimed in any one of the preceding Claims, which also comprises a filler, a plasticiser, a polyol, a glycol, soybean oil, tone oil, a mineral oil an epoxy resins or two or more thereof.
